(19) Europäisches Patentamt
European Patent Office
Office européen des brevets

(11) **EP 4 654 288 A1**

(12) **EUROPEAN PATENT APPLICATION**
published in accordance with Art. 153(4) EPC

(43) Date of publication:
26.11.2025 Bulletin 2025/48

(21) Application number: 23937831.8

(22) Date of filing: 19.05.2023

(51) International Patent Classification (IPC):
*H01M 4/36* (2006.01)

(52) Cooperative Patent Classification (CPC):
Y02E 60/10

(86) International application number:
**PCT/CN2023/095336**

(87) International publication number:
**WO 2024/239152 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **ZHANG, Le
Ningde, Fujian 352100 (CN)**

• **LIU, Qiang
Ningde, Fujian 352100 (CN)**
• **SUN, Yu
Ningde, Fujian 352100 (CN)**
• **QIN, Pengcheng
Ningde, Fujian 352100 (CN)**
• **LI, Baiqing
Ningde, Fujian 352100 (CN)**
• **JIN, Haizu
Ningde, Fujian 352100 (CN)**

(74) Representative: **Lorenz Seidler Gossel Part. mbB
Widenmayerstr. 23
80538 München (DE)**

(54) **CATHODE PIECE, BATTERY, AND ELECTRIC APPARATUS**

(57) This application relates to a positive electrode plate, a battery, and an electric apparatus. The positive electrode plate includes at least two positive electrode active material layers; two adjacent layers of the positive electrode active material layers respectively include a first positive electrode active material and a second positive electrode active material; an average particle size of the first positive electrode active material is denoted as R1; an average particle size of the second positive electrode active material is denoted as R2; and R1 and R2 satisfy the following relationship: R1 ≥ 5R2. When R1 and R2 of the first positive electrode active material and the second positive electrode active material satisfy R1 ≥ 5R2, the positive electrode plate is configured to include at least two positive electrode active material layers. At a same compacted density, high mechanical strength of an active material having a relatively small particle size alleviates this situation to some extent. Moreover, gaps among particles having large particle sizes cannot be completely filled, so that compared with a physically mixed system, a better ion conduction effect is achieved. The two effects complement each other, so that kinetics performance of the battery can be improved effectively.

FIG. 5

**Description**

**TECHNICAL FIELD**

This application relates to a positive electrode plate, a battery, and an electric apparatus.

**BACKGROUND**

In recent years, with the development of lithium-ion secondary battery technologies, lithium-ion secondary batteries have been widely used in energy storage power systems such as hydropower plants, thermal power plants, wind power plants, or solar power plants, as well as in fields such as power tools, electric bicycles, electric motorcycles, electric vehicles, military equipment, or aerospace. As lithium-ion secondary batteries have made great progress, higher requirements are imposed on kinetics performance and the like of batteries.

**SUMMARY**

This application aims to provide a positive electrode plate, a battery, and an electric apparatus.

To improve energy densities, safety, and other performance of batteries, different active materials are usually mixed for use, that is, different active materials are mixed to form a slurry, and the slurry is coated on a surface of a current collector, so as to form a mixed active material layer.

Inventors of this application discovered through experiments that when an active material layer of a battery contains different materials whose particle sizes are significantly different, kinetics performance of the battery is relatively low, but after these materials having different particle sizes are layered, the kinetics performance of the battery is improved significantly.

Embodiments of this application are implemented as follows.

According to a first aspect, an embodiment of this application provides a positive electrode plate. The positive electrode plate includes at least two positive electrode active material layers.

Two adjacent layers of the positive electrode active material layers respectively include a first positive electrode active material and a second positive electrode active material, where an average particle size $D_v50$ of the first positive electrode active material is denoted as R1; an average particle size $D_v50$ of the second positive electrode active material is denoted as R2; and R1 and R2 satisfy the following relationship:

$$R1 \geq 5R2.$$

A reason for the foregoing design may be as follows: In a physically mixed system of a single-layer positive electrode active material layer formed by directly mixing the first positive electrode active material and the second positive electrode active material physically, gaps among large particles are filled with small particles, which decreases porosities and ion channels, and further lowers kinetics performance of a battery. However, when R1 and R2 of the first positive electrode active material and the second positive electrode active material satisfy R1 ≥ 5R2, the positive electrode plate is configured to include at least two positive electrode active material layers. At a same compacted density, high mechanical strength of an active material having a relatively small particle size alleviates this situation to some extent. Moreover, gaps among particles having large particle sizes cannot be completely filled, so that compared with the physically mixed system, a better ion conduction effect is achieved. The two effects complement each other, so that kinetics performance of the battery can be improved effectively.

In some optional implementations, 50R2 ≥ R1 ≥ 5R2, preferably, 35R2 ≥ R1 ≥ 5R2.

In the above technical solution, ranges of the particle sizes of the first positive electrode active material and the second positive electrode active material are further narrowed and limited to the above ranges, which is beneficial to alleviate the following problems: when a difference between the particle sizes is too large, the active material having the large particle size is excessively filled with the material having the small particle size, which decreases gaps, reduces porosities, and worsens ionic impedance.

In some optional implementations, R1 ranges from 2 μm to 20 μm.

In some optional implementations, R1 ranges from 5 μm to 15 μm.

By limiting R1 to range from 2 μm to 20 μm, particle size-matched gaps and particle capacity utilization in the single layer including the first positive electrode active material achieve better effects, thereby further improving the kinetics performance of the battery.

In some optional implementations, R2 ranges from 0.2 μm to 12 μm.

In some optional implementations, R2 ranges from 0.2 μm to 3.6 μm.

By limiting R2 to range from 0.2 μm to 12 μm, particle size-matched gaps and particle capacity utilization in the single layer including the second positive electrode active material achieve better effects, thereby further improving the kinetics performance of the battery.

In some optional implementations, in the first positive electrode active material, 5 $\mu$m $\leq$ D$_v$90 - D$_v$10 $\leq$ 20 $\mu$m. Optionally, in the first positive electrode active material, 9 $\mu$m $\leq$ D$_v$90 - D$_v$10 $\leq$ 20 $\mu$m.

By limiting D$_v$90 - D$_v$10 in the first positive electrode active material to the above range, particle size matching of the first positive electrode active material can be improved, thereby improving an energy density of the battery.

In some optional implementations, in the second positive electrode active material, 5 $\mu$m $\leq$ D$_v$90 - D$_v$10 $\leq$ 9 $\mu$m.

By limiting 5 $\mu$m $\leq$ D$_v$90 - D$_v$10 $\leq$ 9 $\mu$m in the second positive electrode active material, particle size matching of the second positive electrode active material can be improved, thereby improving an energy density of the battery.

In some optional implementations, a thickness of the positive electrode active material layer including the first positive electrode active material is denoted as H1; and a thickness of the positive electrode active material layer including the second positive electrode active material is denoted as H2.

The thickness H2 accounts for 10% to 70% of a total thickness of all the positive electrode active material layers of the positive electrode plate.

The second positive electrode active material has a relatively small particle size and a relatively low compacted density. Limiting the thickness H2 to 10% to 70% of the total thickness of all the positive electrode active material layers of the positive electrode plate is beneficial to improve a total compacted density of all the positive electrode active material layers of the positive electrode plate.

In some optional implementations, the first positive electrode active material includes 80% to 100% of secondary particles by mass percentage.

The secondary particle is formed by aggregating many primary particles, with grain boundaries present therein. Transport of lithium ions within the secondary particle may include solid-liquid transport between small particles and solid-solid transport within a small particle, where a smaller internal particle leads to a shorter solid-solid transport path. A particle size of the primary particle is larger than that of a small particle in the secondary particle. Transport of lithium ions within the primary particle is mainly solid-solid transport, where a longer path leads to more difficulty in transport.

Because the first positive electrode active material includes 80% to 100% of secondary particles, and an active material having a relatively large particle size can provide a higher porosity, electrolyte infiltration is facilitated, thereby being beneficial to improve ionic impedance and further improve the kinetics performance of the battery.

In some optional implementations, the second positive electrode active material includes 95% to 100% of primary particles by mass percentage.

In a physically mixed system, particles are subjected to equal pressure. Because active materials having large particle sizes are mostly polycrystalline secondary spheres, and the secondary spheres may break when a compacted density designed for the entire electrode plate is excessively high, the kinetics performance of the battery is impaired.

In the above solution, the second positive electrode active material includes 95% to 100% of primary particles, which not only further facilitates construction of the electrode plate, but also causes the active material having the small particle size to be stacked more densely. Therefore, better mechanical strength can be provided.

In some optional implementations, the first positive electrode active material includes multiple materials, and R1 is D$_v$50 of the multiple materials; or

the second positive electrode active material includes multiple materials, and R2 is D$_v$50 of the multiple materials.

When the first positive electrode active material and the second positive electrode active material each include the multiple materials, advantages of different materials may be leveraged.

In some optional implementations, the first positive electrode active material includes a positive electrode material of a layered structure.

As it is specified that the first active material includes the positive electrode material of the layered structure, a particle size of the positive electrode material of the layered structure is relatively large, and an active material having a large particle size provides a higher energy density and porosity, electrolyte infiltration is facilitated, thereby being beneficial to improve ionic impedance.

In some optional implementations, the first positive electrode active material includes at least one of a lithium nickel cobalt manganese oxide ternary material, a lithium nickel cobalt aluminum oxide ternary material, or a lithium nickel cobalt manganese aluminum oxide ternary material, or includes at least one of doped or coated materials of these ternary materials.

In some optional implementations, the second positive electrode active material includes at least one of a positive electrode material of a spinel structure or a positive electrode material of an olivine structure.

As it is specified that the first active material includes at least one of the positive electrode material of the spinel structure or the positive electrode material of the olivine structure, and the positive electrode material of the spinel structure or the positive electrode material of the olivine structure has a relatively small particle size and thus is stacked more densely, better mechanical strength may be provided, and more grain boundaries are contained, which also facilitates infiltration. A layered design with the positive electrode material of the layered structure can effectively improve the kinetics performance of the battery.

In some optional implementations, the second positive electrode active material includes at least one of lithium iron phosphate, lithium manganese iron phosphate, or modified and doped lithium manganese iron phosphate.

Optionally, a chemical formula of the modified and doped lithium manganese iron phosphate includes: $LiMPO_4$, where M includes Mn and a non-Mn element.

Optionally, the non-Mn element includes one or both of a first doping element or a second doping element, where the first doping element is an Mn-site doping element; and the second doping element is a P-site doping element.

Optionally, the first doping element includes one or more elements of Zn, Al, Na, K, Mg, Mo, W, Ti, V, Zr, Fe, Ni, Co, Ga, Sn, Sb, Nb, or Ge.

Optionally, the first doping element includes at least two of Fe, Ti, V, Ni, Co, or Mg.

Optionally, the second doping element includes one or more elements of B, S, Si, or N.

Optionally, the second positive electrode active material includes $Li_{1+x}Mn_{1-y}A_yP_{1-z}R_zO_4$, where x is any value in a range of -0.100 to 0.100; y is any value in a range of 0.001 to 0.500; z is any value in a range of 0.001 to 0.100; A includes one or more elements of Zn, Al, Na, K, Mg, Mo, W, Ti, V, Zr, Fe, Ni, Co, Ga, Sn, Sb, Nb, or Ge; and R includes one or more elements of B, S, Si, or N.

Optionally, the second positive electrode active material includes $Li_aA_eMn_{1-f}B_fP_{1-g}C_gO_{4-n}D_n$,

where A includes one or more elements of Zn, Al, Na, K, Mg, Nb, Mo, or W;
B includes one or more elements of Ti, V, Zr, Fe, Ni, Mg, Co, Ga, Sn, Sb, Nb, or Ge;
C includes one or more elements of B, S, Si, or N;
D includes one or more elements of S, F, Cl, or Br; and
a is selected from a range of 0.9 to 1.1; e is selected from a range of 0.001 to 0.1; f is selected from a range of 0.001 to 0.5; g is selected from a range of 0.001 to 0.1; n is selected from a range of 0.001 to 0.1; and the second positive electrode active material is electrically neutral.

Because the particle size of the above positive electrode material is relatively small, when the positive electrode material is used in combination with a material having a relatively large particle size, such as a ternary material, the kinetics performance of the battery can be improved effectively by using the solution in this embodiment of this application.

In some optional implementations, the positive electrode plate includes a current collector.

The at least two positive electrode active material layers are sequentially formed on a surface of the current collector in a stacking manner; and in a direction away from the current collector, porosities of the at least two positive electrode active material layers decrease sequentially.

Due to the configuration that the at least two active material layers are sequentially formed on the surface of the current collector in a stacking manner, and in the direction away from the current collector, the porosities of the at least two active material layers decrease sequentially, an electrolyte solution may fully infiltrate the positive electrode plate, thereby ensuring that lithium-ion conduction is not affected.

In some optional implementations, the porosity of the positive electrode active material layer in contact with the current collector is greater than or equal to 45%. Optionally, the porosity of the positive electrode active material layer in contact with the current collector is greater than or equal to 60%.

Within the above proportion range, a lithium-ion conduction effect is improved.

In some optional implementations, the porosity of the outermost positive electrode active material layer is greater than or equal to 35%. Optionally, the porosity of the outermost positive electrode active material layer is greater than or equal to 50%.

Within the above proportion range, the lithium-ion conduction effect is further improved.

According to a second aspect, an embodiment of this application provides a battery. The battery includes the positive electrode plate according to the first aspect.

In the above technical solution, the battery uses the positive electrode plate according to the first aspect, thereby having superior kinetics performance.

According to a third aspect, an embodiment of this application provides an electric apparatus. The electric apparatus includes the positive electrode plate according to the second aspect.

In the above technical solution, the electric apparatus uses the battery according to the second aspect, thereby having superior kinetics performance.

**BRIEF DESCRIPTION OF DRAWINGS**

To describe technical solutions in embodiments of this application more clearly, the following briefly describes accompanying drawings required for describing the embodiments. It should be understood that the following accompanying drawings only illustrate some embodiments of this application and thus should not be construed as any limitation on a scope. Those of ordinary skill in the art may obtain other related drawings from these accompanying drawings without creative efforts.

FIG. 1 is a schematic diagram of a structure of a vehicle according to some embodiments of this application.
FIG. 2 is an exploded view of a battery according to some embodiments of this application.
FIG. 3 is an exploded view of a battery cell shown in FIG. 2.
FIG. 4 is a schematic diagram of a partial structure of an electrode assembly according to some embodiments of this application.
FIG. 5 is a schematic diagram of a partial structure of a positive electrode plate according to some embodiments of this application.

Reference numerals are as follows:

vehicle 1000;
battery 100; controller 200; motor 300;
case 10; first portion 11; second portion 12; accommodation space 13;
battery cell 20; shell 21; electrode assembly 22; electrode terminal 23; pressure relief structure 24;
housing 211; cover 212; positive electrode plate 221; negative electrode plate 222; separator 223;
positive current collector 2211; positive electrode active material layer 2212;
negative current collector 2221; and negative electrode active material layer 2222.

## DETAILED DESCRIPTION

Embodiments of technical solutions of this application are described in detail below with reference to the accompanying drawings. The following embodiments are merely used to describe the technical solutions of this application more clearly. Therefore, the embodiments are merely used as examples, and cannot be used to limit the protection scope of this application.

Unless otherwise defined, all technical and scientific terms used in this specification have the same meanings as those commonly understood by those skilled in the art of this application. The terms used in this specification are merely for a purpose of describing specific embodiments and are not intended to limit this application. The terms "including" and "having" and any variations thereof in the specification, claims, and the above description of the accompanying drawings of this application are intended to cover non-exclusive inclusions.

In the description of the embodiments of this application, the technical terms "first", "second", or the like are merely used to distinguish between different objects and should not be understood as indicating or implying relative importance or implicitly indicating the quantity, specific order, or primary-secondary relationship of the indicated technical features.

In the description of the embodiments of this application, the orientations or positional relationships indicated by the technical terms such as "inner" and "outer" are based on the orientations or positional relationships shown in the accompanying drawings, are merely intended to facilitate the descriptions of the embodiments of this application and simplify the descriptions, are not intended to indicate or imply that the mentioned apparatuses or elements necessarily have specific orientations, or be constructed and operated in a specific orientation, and therefore shall not be construed as a limitation to this application.

In the description of the embodiments of this application, unless specified and defined explicitly otherwise, the technical terms "mounted", "join", "connect", "fixed", and the like should be understood in a broad sense. For example, "connection" may be a fixed connection, a detachable connection, or an integral connection; or may be a direct connection or an indirect connection by means of an intermediate medium. Those of ordinary skill in the art may understand specific meanings of these terms in the embodiments of this application based on specific situations.

Reference to "embodiment" in this specification means that a specific feature, structure, or characteristic described with reference to the embodiment may be included in at least one embodiment of this application. This phrase in various positions of this specification does not necessarily refer to the same embodiment, nor is it an independent or alternative embodiment mutually exclusive with other embodiments. Those skilled in the art explicitly and implicitly understand that the embodiment described in this specification may be combined with other embodiments.

In the embodiments of this application, the same reference numerals denote the same components, and for brevity, detailed descriptions of the same components are omitted in different embodiments. It should be understood that dimensions such as height, length, or width of various components in the embodiments of this application shown in the accompanying drawings, as well as dimensions such as the overall height, length, or width of an integrated device, are merely illustrative and should not constitute any limitation to this application.

A battery including a positive electrode plate obtained by physically mixing different active materials exhibits poor kinetics performance. Analysis shows that reasons for the foregoing problem is as follows: Particles in a physically mixed system are subjected to equal pressure; because active materials having large particle sizes are mostly polycrystalline secondary spheres, and the secondary spheres break when a compacted density designed for the entire electrode plate is excessively high, performance of the battery is impaired; and in the physically mixed system, gaps among large particles are filled with small particles, which decreases porosities and ion channels, resulting in poor kinetics performance of the battery.

An embodiment of this application provides a positive electrode plate. The positive electrode plate includes at least two active material layers.

Two adjacent layers of the active material layers respectively include a first positive electrode active material and a second positive electrode active material, where an average particle size $D_v50$ of the first positive electrode active material is denoted as R1; an average particle size $D_v50$ of the second positive electrode active material is denoted as R2; and R1 and R2 satisfy the following relationship:

$$R1 \geq 5R2.$$

By using the above positive electrode plate, the kinetics performance of the battery can be improved.

An electric apparatus including the above-described battery exhibits more excellent kinetics performance.

In the following embodiments, for ease of description, a lithium-ion battery according to an embodiment of this application is used as an example for description. For the electric apparatus, a vehicle according to an embodiment of this application is used as an example for description.

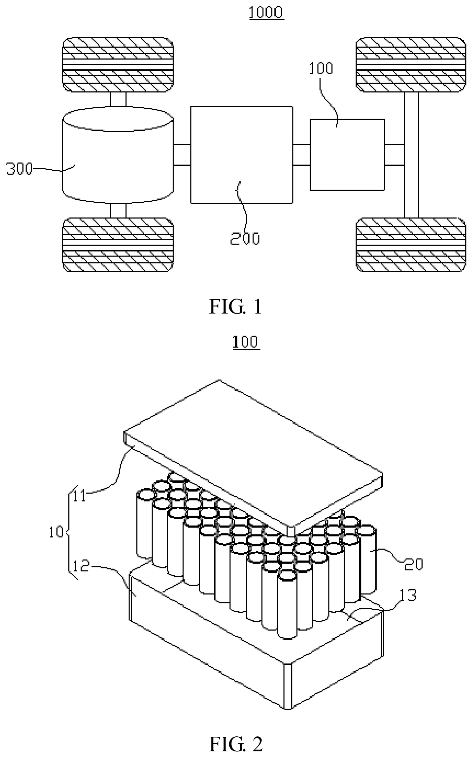

Refer to FIG. 1, which is a schematic diagram of a structure of a vehicle 1000 according to some embodiments of this application. The vehicle 1000 may be a fuel vehicle, a gas vehicle, or a new energy vehicle. The new energy vehicle may be a battery electric vehicle, a hybrid electric vehicle, an extended-range electric vehicle, or the like. A battery 100 is disposed in the vehicle 1000. The battery 100 may be arranged at a bottom, head, or tail of the vehicle 1000. The battery 100 may be configured to supply power to the vehicle 1000, for example, the battery 100 may serve as an operational power source of the vehicle 1000. The vehicle 1000 may further include a controller 200 and a motor 300. The controller 200 is configured to control the battery 100 to supply power to the motor 300, for example, the power is required for startup, navigation, or driving of the vehicle 1000.

In some embodiments of this application, the battery 100 may serve as not only the operational power source of the vehicle 1000, but also a driving power source of the vehicle 1000, so as to replace or partially replace a fuel or natural gas for providing the vehicle 1000 with driving power.

In this application, the battery 100 means a single physical module that includes one or more battery cells 20 to provide voltage and capacity. The battery 100 generally includes a case 10 used for encapsulating the one or more battery cells 20. The case 10 may prevent liquid or another foreign matter from affecting charging or discharging of the battery cells 20.

Refer to FIG. 2, which is an exploded view of a battery 100 according to some embodiments of this application. The battery 100 may include a case 10 and battery cells 20. The battery cells 20 are accommodated in the case 10. The case 10 is configured to accommodate the battery cells 20 and may have various structures. In some embodiments, the case 10 may include a first portion 11 and a second portion 12. The first portion 11 and the second portion 12 cover each other. The first portion 11 and the second portion 12 together define an accommodation space 13 for accommodating the battery cells 20. The second portion 12 may be a hollow structure with an opening at one end; the first portion 11 may be a plate-like structure; and the first portion 11 covers the open side of the second portion 12, so as to form the case 10 with the accommodation space 13. Alternatively, each of the first portion 11 and the second portion 12 may be a hollow structure with an opening on one side; and the open side of the first portion 11 covers the open side of the second portion 12, so as to form the case 10 with the accommodation space 13. Certainly, the first portion 11 and the second portion 12 may be of various shapes, such as a cylinder, a cuboid, or the like.

In the battery 100, there may be one or more battery cells 20. If there are multiple battery cells 20, the battery cells 20 may be connected in series, in parallel, or in series and parallel. The battery cells 20 being connected in series and parallel means that some of them are connected in series and the remaining battery cells are connected in parallel. The multiple battery cells 20 may be directly connected in series, in parallel, or in series and parallel; and then, an entirety formed by the multiple battery cells 20 is accommodated in the case 10. Alternatively, the multiple battery cells 20 may first be connected in series, in parallel, or in series and parallel to form modules; then, the multiple modules are connected in series, in parallel, or in series and parallel to form an entirety; and the entirety is accommodated in the case 10. The battery 100 may alternatively include another structure, for example, the multiple battery cells 20 may be electrically connected through a busbar component, so as to connect the multiple battery cells 20 in parallel, in series, or in parallel and series.

Each battery cell 20 may be a lithium-ion battery, for example, a secondary battery or a primary battery, or may be a lithium-sulfur battery, a sodium-ion battery, or a magnesium-ion battery, but is not limited thereto.

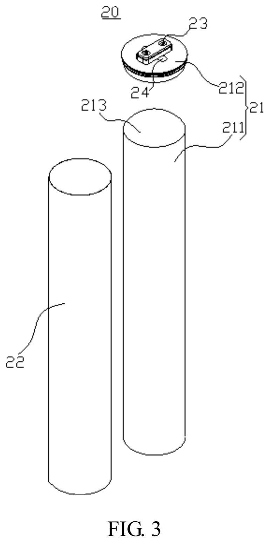

Refer to FIG. 3, which is an exploded view of the battery cell 20 shown in FIG. 2. The battery cell 20 means the minimum constituent unit of the battery 100. The battery cell 20 may include a shell 21, an electrode assembly 22, and an electrolyte solution. Both the electrode assembly 22 and the electrolyte solution are accommodated in the shell 21.

The shell 21 may include a housing 211 and a cover 212. The housing 211 is a component used with the cover 212 to form an internal sealed space of the battery cell 20, where the sealed space may be used to accommodate the electrode assembly 22, the electrolyte solution, and another component. The cover 212 is a component that covers an opening of the housing 211 to isolate an internal environment of the battery cell 20 from an external environment. A shape of the cover 212 may be adapted to a shape of the housing 211, so as to fit the housing 211. The cover 212 may also be provided with functional components, such as an electrode terminal 23 or a pressure relief structure 24. A sealing ring may be provided between the opening of the housing 211 and the cover 212, so as to achieve sealing between the housing 211 and the cover 212.

The housing 211 and the cover 212 may be of various shapes and sizes, such as a cuboid, a cylinder, a hexagonal prism, or the like. Specifically, the shapes of the housing 211 and the cover 212 may be determined based on a specific shape and size of the electrode assembly 22. The housing 211 and the cover 212 may be made of various materials, such as but not limited to copper, iron, aluminum, stainless steel, aluminum alloy, or another metal. The sealing ring may be made of various materials, such as but not limited to PP (polypropylene), PC (polycarbonate), PET (polyethylene terephthalate), or another material that are resistant to electrolyte corrosion, and have high toughness and fatigue resistance. A plating layer may be formed on an outer surface of the housing 211. The plating layer may be made of various materials, such as but not limited to Ni, Cr, or another corrosion-resistant material.

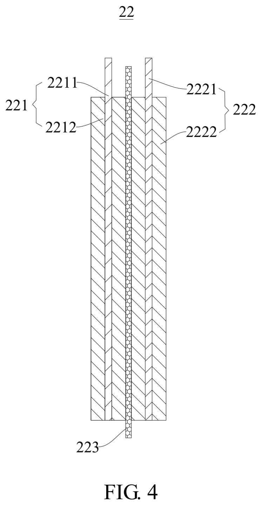

Refer to FIG. 4. The electrode assembly 22 may be composed of a positive electrode plate 221, a negative electrode plate 222, and a separator 223. The separator 223 is located between the positive electrode plate 221 and the negative electrode plate 222, so as to play a role in isolation. The electrode assembly 22 may be a wound structure or a laminated structure. This embodiment of this application is not limited thereto.

Refer to FIG. 4. The negative electrode plate 222 includes a negative current collector 2221 and a negative electrode active material layer 2222. A material of the negative current collector 2221 may be copper. The negative electrode active material layer 2222 includes a negative electrode active material. The negative electrode active material includes at least one of graphite, silicon, a silicon alloy, or a tin alloy.

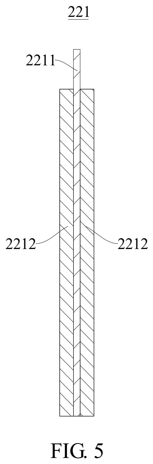

Refer to FIG. 5. The positive electrode plate 221 includes a positive current collector 2211 and a positive electrode active material layer 2212. Taking a lithium-ion battery cell 20 as an example, a material of the positive current collector 2211 may be aluminum. The positive electrode active material layer 2212 includes a positive electrode active material.

The positive electrode plate 221 includes at least two positive electrode active material layers 2212.

Further, two adjacent layers of the positive electrode active material layers 2212 respectively include a first positive electrode active material and a second positive electrode active material, where an average particle size $D_v50$ of the first positive electrode active material is denoted as R1; an average particle size $D_v50$ of the second positive electrode active material is denoted as R2; and R1 and R2 satisfy the following relationship:

$$R1 \geq 5R2.$$

In a physically mixed system of a single-layer positive electrode active material layer formed by directly mixing the first positive electrode active material and the second positive electrode active material physically, gaps among large particles are filled with small particles, which decreases porosities and ion channels, and further lowers kinetics performance of a battery. However, when R1 and R2 of the first positive electrode active material and the second positive electrode active material satisfy $R1 \geq 5R2$, the positive electrode plate 221 is configured to include at least two positive electrode active material layers 2212. At a same compacted density, high mechanical strength of an active material having a relatively small particle size alleviates this situation to some extent. Moreover, gaps among particles having large particle sizes cannot be completely filled, so that compared with the physically mixed system, a better ion conduction effect is achieved. The two effects complement each other, so that kinetics performance of the battery can be improved effectively. It should be noted that when R1 and R2 of the first positive electrode active material and the second positive electrode active material satisfy R1 2: 5R2, the positive electrode plate 221 is configured to include at least two positive electrode active material layers 2212, and a clear boundary can be formed between two adjacent layers of the positive electrode active material layers 2212.

$D_v50$ described above is such a value that when an accumulated volume of particles of an active material that are accumulated from small to large reaches 50% of a total volume of the material, all particle sizes of the accumulated particles of the active material are less than this value.

Further, in some implementations of this application, $50R2 \geq R1 \geq 5R2$.

Further preferably, in some implementations of this application, $35R2 \geq R1 \geq 5R2$.

Ranges of the particle sizes of the first positive electrode active material and the second positive electrode active material are further narrowed and limited to the above ranges, which is beneficial to alleviate the following problems: when a difference between the particle sizes is too large, the active material having the large particle size is excessively filled with the material having the small particle size, which decreases gaps, reduces porosities, and worsens ionic impedance. Further, in some implementations of this application, R1 ranges from 2 $\mu$m to 20 $\mu$m. Further optionally, in some implementations of this application, R1 ranges from 5 $\mu$m to 15 $\mu$m.

By limiting R1 to range from 2 $\mu$m to 20 $\mu$m, particle size-matched gaps and particle capacity utilization in the single layer including the first positive electrode active material achieve better effects, thereby further improving the kinetics performance of the battery.

For example, in some implementations of this application, a value of R1 is 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, or 15 $\mu$m.

Further, in some implementations of this application, R2 ranges from 0.2 $\mu$m to 12 $\mu$m. Further optionally, in some implementations of this application, R2 ranges from 0.2 $\mu$m to 3.6 $\mu$m.

By limiting R2 to range from 0.2 $\mu$m to 12 $\mu$m, particle size-matched gaps and particle capacity utilization in the single layer including the second positive electrode active material achieve better effects, thereby further improving the kinetics performance of the battery.

For example, in some implementations of this application, a value of R2 is 0.3 $\mu$m, 0.5 $\mu$m, 0.8 $\mu$m, 1 $\mu$m, 1.5 $\mu$m, 2 $\mu$m, 2.5 $\mu$m, 3 $\mu$m, or 3.5 $\mu$m.

Further, in some implementations of this application, in the first positive electrode active material, 5 $\mu$m $\leq D_V 90$ - $D_V 10 \leq 20$ $\mu$m. Further optionally, in the first positive electrode active material, 9 $\mu$m $\leq D_V 90$ - $D_V 10 \leq 20$ $\mu$m.

In the above implementations, $D_V 90$ is such a value that when an accumulated volume of particles of the first positive electrode active material that are accumulated from small to large reaches 90% of a total volume of the material, all particle sizes of the accumulated particles of the first positive electrode active material are less than this value; and $D_V 10$ is such a value that when an accumulated volume of particles of the first positive electrode active material that are accumulated from small to large reaches 10% of a total volume of the material, all particle sizes of the accumulated particles of the first positive electrode active material are less than this value.

By limiting $D_V 90$ - $D_V 10$ in the first positive electrode active material to the above range, particle size matching of the first positive electrode active material can be improved, thereby improving an energy density of the battery.

Further optionally, in some implementations of this application, in the second positive electrode active material, 5 $\mu$m $\leq D_V 90$ - $D_V 10 \leq 9$ $\mu$m.

In the above implementations, $D_V 90$ is such a value that when an accumulated volume of particles of the second positive electrode active material that are accumulated from small to large reaches 90% of a total volume of the material, all particle sizes of the accumulated particles of the second positive electrode active material are less than this value; and $D_V 10$ is such a value that when an accumulated volume of particles of the second positive electrode active material that are accumulated from small to large reaches 90% of a total volume of the material, all particle sizes of the accumulated particles of the second positive electrode active material are less than this value.

By limiting 5 $\mu$m $\leq D_V 90$ - $D_V 10 \leq 9$ $\mu$m in the second positive electrode active material, particle size matching of the second positive electrode active material can be improved, thereby improving an energy density of the battery.

According to embodiments of this application, $D_V 10$, $D_V 50$, or $D_V 90$ described above is determined according to a particle size analyzer-based laser diffraction method. For details, refer to the standard GB/T 19077-2016; and measurement is performed using a laser diffraction scattering particle size analyzer according to manufacturer's instructions.

Further, in some implementations of this application, a thickness of the positive electrode active material layer including the first positive electrode active material is denoted as H1; and a thickness of the positive electrode active material layer including the second positive electrode active material is denoted as H2.

The thickness H2 accounts for 10% to 70% of a total thickness of all the positive electrode active material layers of the positive electrode plate. The second positive electrode active material has a relatively small particle size and a relatively low compacted density. Limiting the thickness H2 to 10% to 70% of the total thickness of all the positive electrode active material layers of the positive electrode plate is beneficial to improve a total compacted density of all the positive electrode active material layers of the positive electrode plate.

Further optionally, the thickness H2 accounts for 11% to 69% of the total thickness of all the positive electrode active material layers of the positive electrode plate.

For example, in some implementations of this application, the thickness H2 accounts for 12%, 13%, 15%, 18%, 20%, 25%, 28%, 30%, 35%, 40%, 45%, 50%, 55%, 60%, or 65% of the total thickness of all the positive electrode active material layers of the positive electrode plate.

Further, in some implementations of this application, the first positive electrode active material includes 80% to 100% of secondary particles by mass percentage, and the remaining particles are primary particles.

The secondary particle is formed by aggregating many primary particles, with grain boundaries present therein. Transport of lithium ions within the secondary particle may include solid-liquid transport between small particles and solid-solid transport within a small particle, where a smaller internal particle leads to a shorter solid-solid transport path. A particle size of the primary particle is larger than that of a small particle in the secondary particle. Transport of lithium ions within the primary particle is mainly solid-solid transport, where a longer path leads to more difficulty in transport.

Because the first positive electrode active material includes 80% to 100% of secondary particles, and an active material having a relatively large particle size can provide a higher porosity, electrolyte infiltration is facilitated, thereby being beneficial to improve ionic impedance and further improve the kinetics performance of the battery.

Further optionally, in some implementations of this application, the first positive electrode active material includes 81% to 99% of secondary particles by mass percentage, and the remaining particles are primary particles.

Further optionally, in some implementations of this application, the first positive electrode active material includes 85% to 95% of secondary particles by mass percentage, and the remaining particles are primary particles.

For example, in some implementations of this application, the first positive electrode active material includes 85%, 86%, 87%, 88%, 89%, 90%, 91%, 92%, 93%, or 94% of secondary particles by mass percentage, and the remaining particles are primary particles.

Further, in some implementations of this application, the second positive electrode active material includes 95% to 100% of primary particles by mass percentage, and the remaining particles are secondary particles.

In a physically mixed system, particles are subjected to equal pressure. Because active materials having large particle sizes are mostly polycrystalline secondary spheres, and the secondary spheres may break when a compacted density designed for the entire electrode plate is excessively high, the kinetics performance of the battery is impaired.

In the above solution, the second positive electrode active material includes 95% to 100% of primary particles, which not only further facilitates construction of the electrode plate, but also causes the active material having the small particle size to be stacked more densely. Therefore, better mechanical strength can be provided.

Further optionally, in some implementations of this application, the second positive electrode active material includes 96% to 100% of primary particles by mass percentage, and the remaining particles are secondary particles.

For example, in some implementations of this application, the second positive electrode active material includes 97%, 98%, 99%, or 100% of primary particles by mass percentage, and the remaining particles are secondary particles.

Further, in some implementations of this application, the first positive electrode active material includes multiple materials, and R1 is an average particle size $D_v50$ of the multiple materials; or the second positive electrode active material includes multiple materials, and R2 is $D_v50$ of the multiple materials.

When the first positive electrode active material and the second positive electrode active material each include the multiple materials, advantages of different materials may be leveraged.

Further, in some implementations of this application, the first active material includes a positive electrode material of a layered structure.

As it is specified that the first active material includes the positive electrode material of the layered structure, a particle size of the positive electrode material of the layered structure is relatively large, and an active material having a large particle size provides a higher energy density and porosity, electrolyte infiltration is facilitated, thereby being beneficial to improve ionic impedance.

Further, in some implementations of this application, the first positive electrode active material includes at least one of a lithium nickel cobalt manganese oxide ternary material, a lithium nickel cobalt aluminum oxide ternary material, or a lithium nickel cobalt manganese aluminum oxide ternary material, or includes at least one of doped or coated materials of these ternary materials. Further, in some implementations of this application, the second positive electrode active material includes at least one of a positive electrode material of a spinel structure or a positive electrode material of an olivine structure.

As it is specified that the first active material includes at least one of the positive electrode material of the spinel structure or the positive electrode material of the olivine structure, and the positive electrode material of the spinel structure or the positive electrode material of the olivine structure has a relatively small particle size and thus is stacked more densely, better mechanical strength may be provided, and more grain boundaries are contained, which also facilitates infiltration. A layered design with the positive electrode material of the layered structure can effectively improve the kinetics performance of the battery.

Further, in some implementations of this application, the second positive electrode active material includes at least one of lithium iron phosphate, lithium manganese iron phosphate, or modified and doped lithium manganese iron phosphate.

Further, in some implementations of this application, a chemical formula of the modified and doped lithium manganese iron phosphate includes: $LiMPO_4$, where M includes Mn and a non-Mn element.

$LiMPO_4$ is not a specific molecular structural formula but a general expression of lithium manganese phosphate.

Further, in some implementations of this application, the non-Mn element includes one or both of a first doping element or a second doping element, where the first doping element is an Mn-site doping element; and the second doping element is a P-site doping element.

Further, in some implementations of this application, the first doping element includes one or more elements of Zn, Al, Na, K, Mg, Mo, W, Ti, V, Zr, Fe, Ni, Co, Ga, Sn, Sb, Nb, or Ge.

Further, in some implementations of this application, the first doping element includes at least two of Fe, Ti, V, Ni, Co, or Mg.

Further, in some implementations of this application, the second doping element includes one or more elements of B, S, Si, or N.

Further, in some implementations of this application, the second positive electrode active material includes $Li_{1+x}Mn_{1-y}A_yP_{1-z}R_zO_4$, where x is any value in a range of -0.100 to 0.100; y is any value in a range of 0.001 to 0.500; z is any value in a range of 0.001 to 0.100; A includes one or more elements of Zn, Al, Na, K, Mg, Mo, W, Ti, V, Zr, Fe, Ni, Co, Ga, Sn, Sb, Nb, or Ge; and R includes one or more elements of B, S, Si, or N.

Further, in some implementations of this application, the second positive electrode active material includes $Li_aA_eMn_{1-f}B_fP_{1-g}C_gO_{4-n}D_n$,

where A includes one or more elements of Zn, Al, Na, K, Mg, Nb, Mo, or W;
B includes one or more elements of Ti, V, Zr, Fe, Ni, Mg, Co, Ga, Sn, Sb, Nb, or Ge;
C includes one or more elements of B, S, Si, or N;
D includes one or more elements of S, F, Cl, or Br; and
a is selected from a range of 0.9 to 1.1; e is selected from a range of 0.001 to 0.1; f is selected from a range of 0.001 to 0.5; g is selected from a range of 0.001 to 0.1; n is selected from a range of 0.001 to 0.1; and the second positive electrode active material is electrically neutral.

In some implementations, a preparation method of the compound $Li_aA_eMn_{1-f}B_fP_{1-g}C_gO_{4-n}D_n$ may include the following steps:

(1) dissolving a manganese source, a manganese-site doping element A source, and an acid in a solvent, followed by stirring to form a suspension of a manganese salt doped with element A; performing filtering on the suspension, to obtain a filter cake; and drying the filter cake, to obtain the manganese salt doped with element A;
(2) adding a lithium source, a phosphorus source, an element R source, a solvent, and the manganese salt doped with element A obtained in step (1) into a reaction vessel, followed by grinding and mixing to obtain a slurry;
(3) transferring the slurry obtained in step (2) to a spray drying device for spray drying granulation to obtain particles; and
(4) sintering the particles obtained in step (3) to obtain a positive electrode active material.

In any implementation, the manganese source may be any manganese-containing substance known in the art for preparing lithium manganese phosphate. For example, the manganese source may be selected from one or a combination of elemental manganese, manganese dioxide, manganese phosphate, manganese oxalate, or manganese carbonate.

The acid is selected from one or more of hydrochloric acid, sulfuric acid, nitric acid, phosphoric acid, or an organic acid such as oxalic acid. For example, the acid may be oxalic acid. The element R source is selected from at least one of sulfate, borate, nitrate, or silicate of element R. The element A source is selected from at least one of the elemental form, oxide, phosphate, oxalate, carbonate, or sulfate of A.

In some embodiments, the positive electrode active material includes $Li_aA_eMn_{1-f}B_fP_{1-g}C_gO_{4-n}D_n$, where A includes one or more elements of Zn, Al, Na, K, Mg, Nb, Mo, or W; B includes one or more elements of Ti, V, Zr, Fe, Ni, Mg, Co, Ga, Sn, Sb, Nb, or Ge; C includes one or more elements of B, S, Si, or N; D includes one or more elements of S, F, Cl, or Br; a is selected from a range of 0.9 to 1.1; e is selected from a range of 0.001 to 0.1; f is selected from a range of 0.001 to 0.5; g is selected from a range of 0.001 to 0.1; n is selected from a range of 0.001 to 0.1; and the positive electrode active material is electrically neutral.

It should be noted that the compound $Li_aA_eMn_{1-f}B_fP_{1-g}C_gO_{4-n}D_n$ is actually a specific $LiMPO_4$ material. For a preparation method of the material, refer to that of $Li_aA_eMn_{1-f}B_fP_{1-g}C_gO_{4-n}D_n$, which is not limited herein.

In some embodiments, the positive electrode active material further includes a carbon-containing coating layer.

Introduction of the carbon-containing coating layer improves conductivity of the positive electrode active material. In this case, a structure of the positive electrode active material actually uses a core-shell structure, in which $LiMPO_4$ is used as a core, and a surface of the core is coated with a coating layer.

A charging/discharging process of the battery is accompanied by intercalation, deintercalation, and consumption of Li. A molar content of Li varies with different discharging states of the battery.

In this application, in a list of positive electrode materials, a molar content of Li corresponds to an initial state of the material, namely, a state before feeding. When the positive electrode material is applied in a battery system, the molar content of Li changes after a charge-discharge cycle.

In addition, for different preparation processes and conditions of the material, the molar content of element O is usually not strictly the coefficient of element O in the chemical formula and may fluctuate. For example, in $Li_{1+x}Mn_{1-y}A_yP_{1-z}R_zO_4$, the molar content of element O is not strictly 4.

Because the particle size of the above positive electrode material is relatively small, when the positive electrode material is used in combination with a material having a relatively large particle size, such as a ternary material, the kinetics performance of the battery can be improved effectively by using the solution in this embodiment of this application.

Further, in some implementations of this application, the positive electrode plate includes a current collector.

The at least two active material layers are sequentially formed on a surface of the current collector in a stacking manner; and in a direction away from the current collector, porosities of the at least two active material layers decrease sequentially.

Due to the configuration that the at least two active material layers are sequentially formed on the surface of the current collector in a stacking manner, and in the direction away from the current collector, the porosities of the at least two active material layers decrease sequentially, an electrolyte solution may fully infiltrate the positive electrode plate, thereby ensuring that lithium-ion conduction is not affected.

Further, in some implementations of this application, the porosity of the active material layer in contact with the current collector is greater than or equal to 45%.

Within the above proportion range, a lithium-ion conduction effect is improved.

Further optionally, in some implementations of this application, the porosity of the active material layer in contact with the current collector is greater than or equal to 60%.

For example, a porosity of the positive electrode active material layer in contact with the positive current collector is 46%, 50%, 55%, 65%, or 70%.

Further, in some implementations of this application, a porosity of the outermost active material layer is greater than or equal to 35%.

Within the above proportion range, the lithium-ion conduction effect is further improved.

Further optionally, a porosity of the outermost active material layer is greater than or equal to 50%.

For example, the porosity of the outermost positive electrode active material layer is 36%, 40%, 40%, 55%, or 65%.

According to an embodiment of this application, a porosity may be determined according to a gas displacement method. Specifically, according to an embodiment of this application, the porosity may be determined with reference to GB/T 24586-2009 in the following steps: immersing an electrode plate in dimethyl carbonate (DMC) for cleaning, followed by drying, where if the electrode plate is a fresh electrode plate, cleaning is not required; placing samples in a sample cup, recording a quantity of the samples, and calculating apparent volumes; placing the samples in a true density tester; and measuring true volumes according to the gas displacement method. A porosity of the electrode plate is a percentage, in a total volume of the electrode plate, of a pore volume in the electrode plate, where a calculation formula of the porosity is: Porosity $= (V - V0)/V \times 100\%$, where V0 denotes a true volume, and V denotes an apparent volume; and a calculation formula of the apparent volume is: $V = S * H * A$, where S denotes a surface area of the electrode plate, H denotes a thickness of the electrode plate, and A denotes a quantity of electrode plate samples.

Further, in some implementations of this application, a mass ratio of an active material in each positive electrode active material layer to a total mass of a positive electrode active material of the positive electrode plate is 10% to 90%.

By controlling the mass ratio of the active material in each positive electrode active material layer to the total mass of the positive electrode active material of the positive electrode plate to be 10% to 90%, a positive electrode active material layer having a relatively good thickness may be obtained, thereby ensuring the kinetics performance of the battery.

Further optionally, the mass ratio of the active material in each positive electrode active material layer to the total mass of the positive electrode active material of the positive electrode plate is 15% to 85%.

For example, the mass ratio of the active material in each positive electrode active material layer to the total mass of the positive electrode active material of the positive electrode plate is 20%, 30%, 40%, 50%, 60%, 70%, or 80%.

Further, in some implementations of this application, the active material layer further includes a conductive agent and a binder.

The active material, the conductive agent, and the binder respectively account for 89% to 98%, 0.4% to 5%, and 0.6% to 6% by mass percentage.

Within the above proportion range, a positive electrode active material slurry with excellent comprehensive performance can be obtained.

Further optionally, in some implementations of this application, the active material, the conductive agent, and the binder respectively account for 90% to 97%, 0.5% to 4.8%, and 0.7% to 5.9% by mass percentage.

For example, the active material, the conductive agent, and the binder respectively account for 91%, 4%, and 5% by mass percentage; or the active material, the conductive agent, and the binder respectively account for 95%, 1%, and 4% by mass percentage; or the active material, the conductive agent, and the binder respectively account for 96%, 0.5%, and 3.5% by mass percentage.

Some specific examples are listed below to better description of this application.

[Second Positive Electrode Active Material]

A. A preparation method of a compound $LiMn_{0.22}Fe_{0.78}PO_4$ included the following steps.

Step S1: Preparation of Fe-doped manganese oxalate

252.9 g of manganese carbonate and 903.7 g of ferrous carbonate were added into a mixer, followed by 6 hours' mixing to obtain a uniform mixture. Then, the mixture was transferred to a reaction kettle; 5 L of deionized water and 1260.6 g of oxalic acid dihydrate were added; the reaction kettle was heated to 80°C; stirring was performed at 500 rpm for 6 hours for uniform mixing until a reaction ended and gas evolution ceased; and a suspension of Fe-doped manganese oxalate was obtained. Subsequently, filtering was performed on the suspension; drying was performed at 120°C; and sand milling was performed to obtain ferromanganese oxalate particles having a particle size of 100 nm.

Step S2: Preparation of $LiMn_{0.22}Fe_{0.78}PO_4$

1791.4 g of ferromanganese oxalate (calculated as $C_2O_4Mn_{0.22}Fe_{0.78}\cdot2H_2O$) prepared in step S1, 369.4 g of lithium carbonate, and 1150.1 g of ammonium dihydrogen phosphate were added into 20 L of deionized water; sufficient stirring was performed; a homogeneous mixing reaction was carried out at 80°C for 10 hours to obtain a slurry; the slurry was transferred to a spray drying device for spray drying granulation, followed by drying at 250°C to obtain a powder; and the powder was sintered in a roller kiln at 700°C for 4 hours in a protective atmosphere (90% nitrogen and 10% hydrogen).

A preparation method of carbon-coated $LiMn_{0.22}F_{e0.78}PO_4$ included:

1791.4 g of ferromanganese oxalate (calculated as $C_2O_4Mn_{0.22}F_{e0.78}\cdot2H_2O$) prepared in step S1, 369.4 g of lithium carbonate, 1150.1 g of ammonium dihydrogen phosphate, and 0.005 mol of sucrose were added into 20 L of deionized water; sufficient stirring was performed; a homogeneous mixing reaction was carried out at 80°C for 10 hours to obtain a slurry; the slurry was transferred to a spray drying device for spray drying granulation, followed by drying at 250°C to obtain a powder; and the powder was sintered in a roller kiln at 700°C for 4 hours in a protective atmosphere (90% nitrogen and 10% hydrogen).
Preparation steps of other undoped lithium manganese iron phosphate materials are the same as those of the above compound A. Differences lie only in that contents of manganese carbonate and ferrous carbonate are changed, provided that the molar ratios of manganese and iron in a chemical formula of a corresponding compound are satisfied.
The material may also be directly purchased commercially.
B. A preparation method of a compound $Li_{1.001}Mn_{0.999}Fe_{0.001}P_{0.999}Si_{0.001}O_4$ included the following steps.

Step S1: Preparation of Fe-doped manganese oxalate

1148.2 g of manganese carbonate and 1.2 g of ferrous carbonate were added into a mixer, followed by 6 hours' mixing to obtain a uniform mixture. Then, the mixture was transferred to a reaction kettle; 5 L of deionized water and 1260.6 g of oxalic acid dihydrate were added; the reaction kettle was heated to 80°C; stirring was performed at 500 rpm for 6 hours for uniform mixing until a reaction ended and gas evolution ceased; and a suspension of Fe-doped manganese oxalate was obtained. Subsequently, filtering was performed on the suspension; drying was performed at 120°C; and sand milling was performed to obtain ferromanganese oxalate particles having a particle size of 100 nm.

Step S2: Preparation of $Li_{1.001}Mn_{0.999}Fe_{0.001}P_{0.999}Si_{0.001}O_4$

1789.6 of ferromanganese oxalate (calculated as $C_2O_4Mn_{0.999}Fe0.001\cdot2H_2O$), 369.8 g of lithium carbonate, 1148.9 g of ammonium dihydrogen phosphate, and 0.8 g of silicic acid were added into 20 L of deionized water; sufficient stirring was performed; a homogeneous mixing reaction was carried out at 80°C for 10 hours to obtain a slurry; the slurry was transferred to a spray drying device for spray drying granulation, followed by drying at 250°C to obtain a powder; and the powder was sintered in a roller kiln at 700°C for 4 hours in a protective atmosphere (90% nitrogen and 10% hydrogen).
Preparation steps of lithium manganese iron phosphate materials doped with other elements (for example, Ti) are the same as those of the above compound B. Differences lie only in that silicic acid is replaced with a source (for example, titanium tetrachloride) of a corresponding element, and that ratios of raw materials are adjusted, so as to ensure that molar ratios in a chemical formula of a corresponding compound are satisfied.
The material may also be obtained through commercial procurement.

[First Positive Electrode Active Material]

The positive electrode materials of the layered structure may be obtained through commercial procurement.

Example 1

1) Preparation of a positive electrode plate

The above first positive electrode active material was selected and mixed with a conductive agent and a binder in a specific mass ratio, to obtain a mixture; and the mixture was dispersed in N-methylpyrrolidone to obtain a first positive electrode active material slurry, where an average particle size of the first positive electrode active material was R1. For the first positive electrode active material and specific parameters thereof, see Table 1.

The above second positive electrode active material was selected and mixed with a conductive agent and a binder in a specific mass ratio, to obtain a mixture; and the mixture was dispersed in N-methylpyrrolidone to obtain a second positive electrode active material slurry, where an average particle size of the second positive electrode active material was R2.

The first positive electrode active material slurry prepared above was coated on both surfaces of aluminum foil. Moreover, the second positive electrode active material slurry prepared above was coated on a positive electrode surface that has already been coated with the first positive electrode active material slurry, so as to obtain a positive electrode plate, where in an active material layer of the positive electrode plate, mass proportions of the first positive electrode active material and the second positive electrode active material each were 50%.

2) Preparation of a negative electrode plate

A negative electrode active material artificial graphite, hard carbon, a conductive agent acetylene black, a binder styrene-butadiene rubber (SBR), and a thickener sodium carboxymethyl cellulose (CMC) were added in a weight ratio of 90:5:2:2:1 into deionized water, followed by mixing to obtain a uniform mixture; and the mixture was coated on copper foil, followed by drying and cold pressing, so as to obtain a negative electrode plate, where a coating amount was 0.2 $g/cm^2$, and a compacted density was 1.7 $g/cm^3$.

3) Preparation of a separator

A substrate was coated with a coating to obtain a separator, where a polyethylene film was used as the substrate.

4) Preparation of a lithium-ion battery

The positive electrode plate, the separator, and the negative electrode plate were stacked in order, where the separator was located between the positive and negative electrode plates for isolation, so as to play a role in isolation. Winding was performed to obtain a bare cell. The bare cell was placed in an outer package. An electrolyte solution was injected, followed by sealing, so as to obtain a battery. The electrolyte solution was a solution formed by mixing 1 mol/L of $LiPF_6$ with ethylene carbonate (EC), diethyl carbonate (DEC), and dimethyl carbonate (DMC) that are at a 1:1:1 volume ratio.

Differences between Examples 2-35 and Example 1 are shown in Tables 1 and 2.

Example 36 differs from Example 1 in that step 1) of Example 1 was changed as follows: the second positive electrode active material slurry was first coated on both surfaces of the aluminum foil, and then the first positive electrode active material slurry was coated on the surfaces of the second positive electrode active material slurry. For other preparation parameters, see Tables 1 and 2.

Comparative Example 1

Comparative Example 1 differs from Example 1 only in that step 1) preparation of a positive electrode plate was changed as follows: the first positive electrode active material slurry and the second positive electrode active material slurry were mixed uniformly and then coated on both surfaces of the aluminum foil, where the mass proportions of the first positive electrode active material and the second positive electrode active material each were 50%, too.

Differences between the remaining comparative examples and Comparative Example 1 are shown in Tables 1 and 2.

Test method:

Method for testing kinetics performance: At 25°C, a hard-shell battery was first fully discharged at a rate of 0.3C and then tested. A test process was as follows: the hard-shell battery was charged at a rate of 0.3C and a constant current to a voltage of 4.25 V, and then charged at a constant voltage of 4.25 V until a current reached 0.02C. After 10 minutes' standing, a lithium-ion battery was discharged at a rate of 0.3C and a constant current to a voltage of 2.5 V. At this time, one charge-discharge cycle process was finished. A quotient of dividing a voltage drop in the first 30 seconds of this discharge process by a discharge current was recorded as an impedance of a first cycle. 500 cyclic charge-discharge tests were performed on the hard-shell battery according to the above method. A ratio of a voltage drop in the first 30 seconds of the 500th cycle to a discharge current of the 500th cycle was recorded as an impedance of the 500th cycle. A ratio of an impedance difference between the 500th cycle and the first cycle to the impedance of the first cycle (an impedance growth rate) may represent kinetics performance.

Performance of lithium-ion batteries of each example and comparative example was tested, where results are shown in Table 3.

**Table 1**

|  | First Positive Electrode Active Material | R1 ($D_v50$) | $D_v90-D_v10$ | H1 | Particle |
|---|---|---|---|---|---|
| Example 1 | $Li_{1.00}N1_{0.54}Co_{0.14}Mn_{0.32}O_2$ | 9.5 | 12 | 25 $\mu m$ | Secondary particle |
| Example 2 | $Li_{1.00}Ni_{0.59}CO_{0.14}Mn_{0.27}O_2$ | 9.5 | 12 | 25 $\mu m$ | Secondary particle |
| Example 3 | $Li_{1.00}Ni_{0.82}CO_{0.12}Mn_{0.06}O_2$ | 9.5 | 12 | 25 $\mu m$ | Secondary particle |
| Example 4 | $Li_{1.00}Ni_{0.89}Co_{0.07}Mn_{0.04}O_2$ | 9.5 | 12 | 25 $\mu m$ | Secondary particle |
| Example 5 | $Li_{1.00}N1_{0.91}Co_{0.0}Mn_{0.04}O_2$ | 9.5 | 12 | 25 $\mu m$ | Secondary particle |
| Example 6 | $Li_{1.00}Ni_{0.91}Co_{0.05}Mn_{0.04}O_2$ | 9.5 | 12 | 25 $\mu m$ | Secondary particle |
| Example 7 | $Li_{1.00}Ni_{0.89}Co_{0.07}Mn_{0.04}O_2$ | 8 | 12 | 25 $\mu m$ | Secondary particle |
| Example 8 | $Li_{1.00}Ni_{0.89}Co_{0.07}Mn_{0.04}O_2$ | 9.5 | 12 | 25 $\mu m$ | Secondary particle |
| Example 9 | $Li_{1.00}Ni_{0.89}Co_{0.07}Mn_{0.04}O_2$ | 8 | 12 | 25 $\mu m$ | Secondary particle |
| Example 10 | $Li_{1.00}Ni_{0.89}Co_{0.07}Mn_{0.04}O_2$ | 9.5 | 12 | 25 $\mu m$ | Secondary particle |
| Example 11 | $Li_{1.00}Ni_{0.89}Co_{0.07}Mn_{0.04}O_2$ | 9.5 | 12 | 25 $\mu m$ | Secondary particle |
| Example 12 | $Li_{1.00}Ni_{0.89}Co_{0.07}Mn_{0.04}O_2$ | 9.5 | 12 | 25 $\mu m$ | Secondary particle |
| Example 13 | $Li_{1.00}Ni_{0.89}Co_{0.07}Mn_{0.04}O_2$ | 5 | 12 | 25 $\mu m$ | Primary particle |
| Example 14 | $Li_{1.001}Ni_{0.91}Co_{0.05}Mn_{0.04}O_2$ | 9.5 | 12 | 15 $\mu m$ | Secondary particle |
| Example 15 | $Li_{1.001}Ni_{0.91}Co_{0.05}Mn_{0.04}O_2$ | 9.5 | 12 | 20 $\mu m$ | Secondary particle |
| Example 16 | $Li_{1.001}Ni_{0.91}Co_{0.05}Mn_{0.04}O_2$ | 9.5 | 12 | 30 $\mu m$ | Secondary particle |
| Example 17 | $Li_{1.001}Ni_{0.91}Co_{0.05}Mn_{0.04}O_2$ | 9.5 | 12 | 40 $\mu m$ | Secondary particle |
| Example 18 | $Li_{1.001}Ni_{0.91}Co_{0.05}Mn_{0.04}O_2$ | 9.5 | 12 | 45 $\mu m$ | Secondary particle |
| Example 19 | $Li_{1.00}Ni_{0.89}Co_{0.07}Mn_{0.04}O_2$ | 9.5 | 12 | 15 $\mu m$ | Secondary particle |

(continued)

| | | First Positive Electrode Active Material | R1 ($D_v50$) | $D_v90$-$D_v10$ | H1 | Particle |
|---|---|---|---|---|---|---|
| | Example 20 | $Li_{1.00}Ni_{0.89}Co_{0.07}Mn_{0.04}O_2$ | 9.5 | 12 | 20 μm | Secondary particle |
| | Example 21 | $Li_{1.00}Ni_{0.89}Co_{0.07}Mn_{0.04}O_2$ | 9.5 | 12 | 30 μm | Secondary particle |
| | Example 22 | $Li_{1.00}Ni_{0.89}Co_{0.07}Mn_{0.04}O_2$ | 9.5 | 12 | 40 μm | Secondary particle |
| | Example 23 | $Li_{1.00}Ni_{0.89}Co_{0.07}Mn_{0.04}O_2$ | 9.5 | 12 | 45 μm | Secondary particle |
| | Example 24 | $Li_{1.00}Ni_{0.89}Co_{0.07}Mn_{0.04}O_2$ | 9.5 | 25 | 25 μm | Secondary particle |
| | Example 25 | $Li_{1.00}Ni_{0.89}Co_{0.07}Mn_{0.04}O_2$ | 9.5 | 20 | 25 μm | Secondary particle |
| | Example 26 | $Li_{1.00}Ni_{0.89}Co_{0.07}Mn_{0.04}O_2$ | 9.5 | 15 | 25 μm | Secondary particle |
| | Example 27 | $Li_{1.00}Ni_{0.89}Co_{0.07}Mn_{0.04}O_2$ | 9.5 | 10 | 25 μm | Secondary particle |
| | Example 28 | $Li_{1.00}Ni_{0.89}Co_{0.07}Mn_{0.04}O_2$ | 8 | 8 | 25 μm | Secondary particle |
| | Example 29 | $Li_{1.00}Ni_{0.89}Co_{0.07}Mn_{0.04}O_2$ | 8 | 5 | 25 μm | Secondary particle |
| | Example 30 | $Li_{1.00}Ni_{0.89}Co_{0.07}Mn_{0.04}O_2$ | 8 | 3 | 25 μm | Secondary particle |
| | Example 31 | $Li_{1.00}Ni_{0.54}Co_{0.14}Mn_{0.32}O_2$ + $Li_{1.00}Ni_{0.55}Co_{0.12}Mn_{0.33}O_2$ | 9.5 | 12 | 25 μm | Secondary particle |
| | Example 32 | 90 wt% of $Li_{1.00}Ni_{0.54}Co_{0.14}Mn_{0.32}O_2$ + 10 wt% of $Li_{1.00}Ni_{0.59}Co_{0.14}Mn_{0.27}O_2$ | 9.5 | 12 | 25 μm | Secondary particle |
| | Example 33 | 76 wt% of $Li_{1.00}Ni_{0.54}Co_{0.14}Mn_{0.32}O_2$ + 24 wt% of $Li_{1.00}Ni_{0.59}Co_{0.14}Mn_{0.27}O_2$ | 9.5 | 12 | 25 μm | Secondary particle |

**Table 2**

| | Second positive electrode active material | | | | |
|---|---|---|---|---|---|
| | Second positive electrode active material | R2 ($D_v50$) | H2 | Particle | R1 (Dv50)/R2 ($D_v50$) |
| Example 1 | $Li_{1.00}Mn_{0.22}Fe_{0.78}PO_4$ | 0.5 | 25 μm | Primary particle | 19 |
| Example 2 | $Li_{1.00}Mn_{0.36}Fe_{0.64}PO_4$ | 0.5 | 25 μm | Primary particle | 19 |
| Example 3 | $Li_{1.001}Mn_{0.999}Fe_{0.001}P_{0.999}Si_{0.001}O_4$ | 0.5 | 25 μm | Primary particle | 19 |
| Example 4 | $Li_{1.00}Mn_{0.77}Fe_{0.20}Ti_{0.03}PO_4$ | 0.5 | 25 μm | Primary particle | 19 |
| Example 5 | $Li_{1.00}Mn_{0.75}Fe_{0.16}Ti_{0.09}PO_4$ | 0.5 | 25 μm | Primary particle | 19 |
| Example 6 | $Li_{1.00}Mn_{0.22}Fe_{0.78}PO_4$ | 0.5 | 25 μm | Primary particle | 19 |
| Example 7 | $Li_{1.00}Mn_{0.77}Fe_{0.20}Ti_{0.03}PO_4$ | 0.15 | 25 μm | Primary particle | 53 |
| Example 8 | $Li_{1.00}Mn_{0.77}Fe_{0.20}Ti_{0.03}PO_4$ | 1 | 25 μm | Primary particle | 9 |
| Example 9 | $Li_{1.00}Mn_{0.77}Fe_{0.20}Ti_{0.03}PO_4$ | 1.6 | 25 μm | Primary particle | 5 |
| Example 10 | $Li_{1.00}Mn_{0.77}Fe_{0.20}Ti_{0.03}PO_4$ | 0.3 | 25 μm | Primary particle | 32 |

(continued)

| | Second positive electrode active material | R2 ($D_v$50) | H2 | Particle | R1 ($D_v$50)/R2 ($D_v$50) |
|---|---|---|---|---|---|
| Example 11 | $Li_{1.00}Mn_{0.77}Fe_{0.20}Ti_{0.03}PO_4$ | 0.2 | 25 μm | Primary particle | 47 |
| Example 12 | $Li_{1.00}Mn_{0.77}Fe_{0.20}Ti_{0.03}PO_4$ | 0.4 | 25 μm | Primary particle | 25 |
| Example 13 | $Li_{1.00}Mn_{0.77}Fe_{0.20}Ti_{0.03}PO_4$ | 0.5 | 25 μm | Primary particle | 9 |
| Example 14 | $Li_{1.00}Mn_{0.22}Fe_{0.78}PO_4$ | 0.5 | 35 μm | Primary particle | 19 |
| Example 15 | $Li_{1.00}Mn_{0.22}Fe_{0.78}PO_4$ | 0.5 | 30 μm | Primary particle | 19 |
| Example 16 | $Li_{1.00}Mn_{0.22}Fe_{0.78}PO_4$ | 0.5 | 20 μm | Primary particle | 19 |
| Example 17 | $Li_{1.00}Mn_{0.22}Fe_{0.78}PO_4$ | 0.5 | 10 μm | Primary particle | 19 |
| Example 18 | $Li_{1.00}Mn_{0.22}Fe_{0.78}PO_4$ | 0.5 | 5 μm | Primary particle | 19 |
| Example 19 | $Li_{1.00}Mn_{0.77}Fe_{0.20}Ti_{0.03}PO_4$ | 1 | 35 μm | Primary particle | 9 |
| Example 20 | $Li_{1.00}Mn_{0.77}Fe_{0.20}Ti_{0.03}PO_4$ | 1 | 30 μm | Primary particle | 9 |
| Example 21 | $Li_{1.00}Mn_{0.77}Fe_{0.20}Ti_{0.03}PO_4$ | 1 | 20 μm | Primary particle | 9 |
| Example 22 | $Li_{1.00}Mn_{0.77}Fe_{0.20}Ti_{0.03}PO_4$ | 1 | 10 μm | Primary particle | 9 |
| Example 23 | $Li_{1.00}Mn_{0.77}Fe_{0.20}Ti_{0.03}PO_4$ | 1 | 5 μm | Primary particle | 9 |
| Example 24 | $Li_{1.00}Mn_{0.77}Fe_{0.20}Ti_{0.03}PO_4$ | 0.2 | 25 μm | Primary particle | 47.5 |
| Example 25 | $Li_{1.00}Mn_{0.77}Fe_{0.20}Ti_{0.03}PO_4$ | 0.2 | 25 μm | Primary particle | 47.5 |
| Example 26 | $Li_{1.00}Mn_{0.77}Fe_{0.20}Ti_{0.03}PO_4$ | 0.2 | 25 μm | Primary particle | 47.5 |
| Example 27 | $Li_{1.00}Mn_{0.77}Fe_{0.20}Ti_{0.03}PO_4$ | 0.2 | 25 μm | Primary particle | 47.5 |
| Example 28 | $Li_{1.00}Mn_{0.77}Fe_{0.20}Ti_{0.03}PO_4$ | 0.2 | 25 μm | Primary particle | 40 |
| Example 29 | $Li_{1.00}Mn_{0.77}Fe_{0.20}Ti_{0.03}PO_4$ | 0.2 | 25 μm | Primary particle | 40 |
| Example 30 | $Li_{1.00}Mn_{0.77}Fe_{0.20}Ti_{0.03}PO_4$ | 0.2 | 25 μm | Primary particle | 40 |
| Example 31 | $Li_{1.00}Mn_{0.22}Fe_{0.78}PO_4$ | 0.5 | 25 μm | Primary particle | 19 |
| Example 32 | $Li_{1.00}Mn_{0.22}Fe_{0.78}PO_4$ | 0.5 | 25 μm | Primary particle | 19 |
| Example 33 | $Li_{1.00}Mn_{0.22}Fe_{0.78}PO_4$ | 0.5 | 25 μm | Primary particle | 19 |

**Table 3 Battery Performance**

| | Impedance growth rate |
|---|---|
| Example 1 | 35.2% |
| Example 2 | 9.5% |
| Example 3 | 3.4% |
| Example 4 | 17.5% |
| Example 5 | 46.4% |
| Example 6 | 57.2% |
| Example 7 | 69.5% |
| Example 8 | 27.5% |
| Example 9 | 29.6% |
| Example 10 | 38.6% |
| Example 11 | 47.9% |

(continued)

|  | Impedance growth rate |
|---|---|
| Example 12 | 31.0% |
| Example 13 | 33.4% |
| Example 14 | 78.6% |
| Example 15 | 62.1% |
| Example 16 | 59.1% |
| Example 17 | 65.8% |
| Example 18 | 72.3% |
| Example 19 | 46.7% |
| Example 20 | 33.5% |
| Example 21 | 31.0% |
| Example 22 | 37.9% |
| Example 23 | 51.2% |
| Example 24 | 68.4% |
| Example 25 | 57.5% |
| Example 26 | 51.3% |
| Example 27 | 48.3% |
| Example 28 | 56.2% |
| Example 29 | 62.5% |
| Example 30 | 74.8% |
| Example 31 | 36.1% |
| Example 32 | 60.4% |
| Example 33 | 45.3% |
| Example 34 | 41.6% |
| Comparative Example 1 | 87.5% |

The following can be learned from the test results in Table 3:

In solutions of the examples of this application, the impedance growth rates (the ratios of the impedance differences between the 500th cycles and the first cycles to the impedances of the first cycles) range from 3.4% to 78.6%. In Comparative Example 1, the impedance growth rate (the ratio of the impedance difference between the 500th cycle and the first cycle to the impedance of the first cycle) reaches 87.5%, where a lower ratio leads to better kinetics performance. Thus, it can be learned that the solutions of this application effectively improve the kinetics performance of the battery.

Further, it can be learned from Examples 1-6, 8-10, 12-26, and 32-34 that when $35R2 \geq R1 \geq 5R2$, the solutions of this application can further improve the kinetics performance of the battery.

Further, it can be learned from Examples 24 to 32 that when the particle size distribution of the first positive electrode active material satisfies $D_v90 - D_v10 > 20\ \mu m$, the kinetics performance of the battery is improved to a moderate extent; and when the particle size distribution of the first positive electrode active material satisfies $9\ \mu m \leq D_v90 - D_v10 \leq 20\ \mu m$, the kinetics performance of the battery is improved to an excellent extent.

Further, in Example 13, the first positive electrode active material uses primary particles, the second positive electrode active material uses primary particles, and the kinetics performance (the ratio of the impedance difference between the 500th cycle and the first cycle to the impedance of the first cycle) is 33.4%.

In Example 4, the first positive electrode active material uses secondary particles, the second positive electrode active material uses primary particles, and the kinetics performance (the ratio of the impedance difference between the 500th cycle and the first cycle to the impedance of the first cycle) is 17.5%.

By comparing Examples 13 and 4, it can be learned that when the first positive electrode active material uses secondary particles and the second positive electrode active material uses primary particles, the kinetics performance is better.

According to the solutions of the examples of this application, inventors in the art tested particle sizes ($D_v50$) of purchased materials. If the particle sizes ($D_v50$) of the materials meet conditions described in this application, a layered structure design (rather than a design in which materials are mixed in the same layer) may be preferentially used to improve kinetics performance.

The embodiments described above are some rather than all of the embodiments of this application. The detailed description of the embodiments of this application is not intended to limit the protection scope of this application, but merely represents selected embodiments of this application. All other embodiments obtained by those of ordinary skill in the art without creative efforts based on the embodiments of this application fall within the protection scope of this application.

**Claims**

1. A positive electrode plate, **characterized in that** the positive electrode plate comprises at least two positive electrode active material layers; and
two adjacent layers of the positive electrode active material layers respectively comprise a first positive electrode active material and a second positive electrode active material, wherein an average particle size $D_v50$ of the first positive electrode active material is denoted as R1; an average particle size $D_v50$ of the second positive electrode active material is denoted as R2; and R1 and R2 satisfy the following relationship:

$$R1 \geq 5R2.$$

2. The positive electrode plate according to claim 1, **characterized in that**
$50R2 \geq R1 \geq 5R2$, preferably, $35R2 \geq R1 \geq 5R2$.

3. The positive electrode plate according to claim 1 or 2, **characterized in that**
R1 ranges from 2 $\mu$m to 20 $\mu$m; and optionally, R1 ranges from 5 $\mu$m to 15 $\mu$m.

4. The positive electrode plate according to any one of claims 1 to 3, **characterized in that** R2 ranges from 0.2 $\mu$m to 12 $\mu$m; and optionally, R2 ranges from 0.2 $\mu$m to 3.6 $\mu$m.

5. The positive electrode plate according to any one of claims 1 to 4, **characterized in that**

in the first positive electrode active material, 5 $\mu$m < $D_v90$ - $D_v10 \leq 20$ $\mu$m;
optionally, in the first positive electrode active material, 9 $\mu$m $\leq D_v90$ - $D_v10 \leq 20$ $\mu$m; and
optionally, in the second positive electrode active material, 5 $\mu$m $\leq D_v90$ - $D_v10 \leq 9$ $\mu$m.

6. The positive electrode plate according to any one of claims 1 to 5, **characterized in that**

a thickness of the positive electrode active material layer comprising the first positive electrode active material is denoted as H1; and a thickness of the positive electrode active material layer comprising the second positive electrode active material is denoted as H2; and
the thickness H2 accounts for 10% to 70% of a total thickness of all the positive electrode active material layers of the positive electrode plate.

7. The positive electrode plate according to claim 6, **characterized in that**
the first positive electrode active material comprises 80% to 100% of secondary particles by mass percentage.

8. The positive electrode plate according to claim 6, **characterized in that**
the second positive electrode active material comprises 95% to 100% of primary particles by mass percentage.

9. The positive electrode plate according to claim 1, **characterized in that**

the first positive electrode active material comprises multiple materials; and R1 is $D_v50$ of the multiple materials; or
the second positive electrode active material comprises multiple materials; and R2 is $D_v50$ of the multiple materials.

10. The positive electrode plate according to any one of claims 1 to 9, **characterized in that**

the first positive electrode active material comprises a positive electrode material of a layered structure.

11. The positive electrode plate according to claim 10, **characterized in that**
the first positive electrode active material comprises at least one of a lithium nickel cobalt manganese oxide ternary material, a lithium nickel cobalt aluminum oxide ternary material, or a lithium nickel cobalt manganese aluminum oxide ternary material, or comprises at least one of doped or coated materials of these ternary materials.

12. The positive electrode plate according to any one of claims 1 to 9, **characterized in that**
the second positive electrode active material comprises at least one of a positive electrode material of a spinel structure or a positive electrode material of an olivine structure.

13. The positive electrode plate according to claim 12, **characterized in that**

the second positive electrode active material comprises at least one of lithium iron phosphate, lithium manganese iron phosphate, or modified and doped lithium manganese iron phosphate;
optionally, a chemical formula of the modified and doped lithium manganese iron phosphate comprises: $LiMPO_4$, wherein M comprises Mn and a non-Mn element;
optionally, the non-Mn element comprises one or both of a first doping element or a second doping element, wherein the first doping element is an Mn-site doping element; and the second doping element is a P-site doping element;
optionally, the first doping element comprises one or more elements of Zn, Al, Na, K, Mg, Mo, W, Ti, V, Zr, Fe, Ni, Co, Ga, Sn, Sb, Nb, or Ge;
optionally, the first doping element comprises at least two of Fe, Ti, V, Ni, Co, or Mg;
optionally, the second doping element comprises one or more elements of B, S, Si, or N;
optionally, the second positive electrode active material comprises $Li_{1+x}Mn_{1-y}A_yP_{1-z}R_zO_4$, wherein x is any value in a range of -0.100 to 0.100; y is any value in a range of 0.001 to 0.500; z is any value in a range of 0.001 to 0.100; A comprises one or more elements of Zn, Al, Na, K, Mg, Mo, W, Ti, V, Zr, Fe, Ni, Co, Ga, Sn, Sb, Nb, or Ge; and R comprises one or more elements of B, S, Si, or N; or
optionally, the second positive electrode active material comprises $Li_aA_eMn_{1-f}B_fP_{1-g}C_gO_{4-n}D_n$,
wherein A comprises one or more elements of Zn, Al, Na, K, Mg, Nb, Mo, or W;
B comprises one or more elements of Ti, V, Zr, Fe, Ni, Mg, Co, Ga, Sn, Sb, Nb, or Ge;
C comprises one or more elements of B, S, Si, or N;
D comprises one or more elements of S, F, Cl, or Br; and
a is selected from a range of 0.9 to 1.1; e is selected from a range of 0.001 to 0.1; f is selected from a range of 0.001 to 0.5; g is selected from a range of 0.001 to 0.1; n is selected from a range of 0.001 to 0.1; and the second positive electrode active material is electrically neutral.

14. The positive electrode plate according to any one of claims 1 to 13, **characterized in that**

the positive electrode plate comprises a current collector; and
the at least two positive electrode active material layers are sequentially formed on a surface of the current collector in a stacking manner; and in a direction away from the current collector, porosities of the at least two positive electrode active material layers decrease sequentially.

15. The positive electrode plate according to claim 14, **characterized in that**
the porosity of the positive electrode active material layer in contact with the current collector is greater than or equal to 45%; and optionally, the porosity of the positive electrode active material layer in contact with the current collector is greater than or equal to 60%.

16. The positive electrode plate according to claim 14, **characterized in that**
the porosity of the outermost positive electrode active material layer is greater than or equal to 35%; and optionally, the porosity of the outermost positive electrode active material layer is greater than or equal to 50%.

17. A battery, **characterized in that** the battery comprises the positive electrode plate according to any one of claims 1 to 16.

18. An electric apparatus, **characterized in that** the electric apparatus comprises the battery according to claim 17.

1000

FIG. 1

100

FIG. 2

FIG. 3

FIG. 4

221

2211

2212

2212

FIG. 5

## INTERNATIONAL SEARCH REPORT

| | International application No. |
|---|---|
| | **PCT/CN2023/095336** |

### A. CLASSIFICATION OF SUBJECT MATTER

H01M4/36(2006.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DPWI: 电池, 正极, 第二, 活性材料, 平均粒径, D50, Dv50, 比, 倍率, 大电流, battery, cathode, active, material, second, ratio, rate, particle, size, diameter

### C. DOCUMENTS CONSIDERED TO BE RELEVANT

| Category* | Citation of document, with indication, where appropriate, of the relevant passages | Relevant to claim No. |
|---|---|---|
| X | CN 115832183 A (CONTEMPORARY AMPEREX TECHNOLOGY CO., LTD.) 21 March 2023 (2023-03-21) description, paragraphs 3-136 | 1-18 |
| X | CN 110556538 A (CONTEMPORARY AMPEREX TECHNOLOGY CO., LTD.) 10 December 2019 (2019-12-10) description, paragraphs 5-187 | 1-18 |
| X | CN 110660961 A (CONTEMPORARY AMPEREX TECHNOLOGY CO., LTD.) 07 January 2020 (2020-01-07) description, paragraphs 4-68 | 1-18 |
| A | CN 115498150 A (YANCHENG INSTITUTE OF TECHNOLOGY et al.) 20 December 2022 (2022-12-20) entire document | 1-18 |
| A | CN 115692598 A (HUIZHOU EVE ENERGY CO., LTD.) 03 February 2023 (2023-02-03) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 January 2024** | **16 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095336**

| Patent document cited in search report | | | Publication date (day/month/year) | Patent family member(s) | | | Publication date (day/month/year) |
|---|---|---|---|---|---|---|---|
| CN | 115832183 | A | 21 March 2023 | None | | | |
| CN | 110556538 | A | 10 December 2019 | CN | 110556538 | B | 04 May 2021 |
| CN | 110660961 | A | 07 January 2020 | US | 2020006767 | A1 | 02 January 2020 |
| | | | | EP | 3588630 | A1 | 01 January 2020 |
| | | | | CN | 110660961 | B | 21 September 2021 |
| CN | 115498150 | A | 20 December 2022 | None | | | |
| CN | 115692598 | A | 03 February 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 190772016 T
- GB 245862009 T